# EUROPÄISCHE PATENTSCHRIFT

(11) **EP 1 645 462 B1**
(45) Veröffentlichungstag und Bekanntmachung des Hinweises auf die Patenterteilung: **18.11.2009**
(21) Anmeldenummer: 05020136.7
(22) Anmeldetag: 15.09.2005
(51) Int. Cl.: B60P 1/00, B60P 1/28, B60P 1/36

(54) **Fahrzeug**
Motor vehicle
Véhicule automobile

(30) Priorität: 05.10.2004 DE 202004015512 U
(43) Veröffentlichungstag der Anmeldung: 12.04.2006
(73) Patentinhaber: Fliegl, Josef, 84513 Töging (DE)
(72) Erfinder: Fliegl, Josef, 84513 Töging (DE)
(74) Vertreter: Tetzner, Michael

(56) Entgegenhaltungen:
- WO-A-00/69676
- DE-A1- 10 240 799
- GB-A- 670 253
- US-A- 2 318 886
- US-A- 4 578 015

## Beschreibung

Die Erfindung betrifft ein Fahrzeug, insbesondere einen Anhänger, mit einem Boden, zwei Seitenwänden, einer Schiebewand und einer Entladeöffnung.

Ein derartiger Anhänger ist beispielsweise aus der DE 20 2004 009 744 bekannt.

Über einen entsprechenden Betätigungsmechanismus kann die Schiebewand zum Entladen des Anhängers in Richtung der Entladeöffnung verschoben werden. Bei halbzähen bis festen Transportgütern ist dabei jedoch aufgrund der Wandhaftung des Transportgutes ein relativ hohe Schubkraft erforderlich.

Die GB-A-670 253 offenbart ein Fahrzeug, insbesondere ein Müllfahrzeug, mit einem teleskopartig aufgebauten und zusammenschiebbaren Behälter. In der US-A-4,578,015 wird ein LKW mit einer Schiebewand beschrieben.

Aus der US-A-2 318 886 ist ferner eine Entladevorrichtung für LKWs bekannt, bei der eine Schiebewand zwischen zwei Seitenwänden verschoben werden kann. Die Schiebewand passt sich dabei in ihrer Breite an etwaige Unregelmäßigkeiten im Abstand zwischen den Seitenwänden an.

In der DE-A1-102 40 799 wird eine Kippmulde beschrieben, die einen rechteckigen Querschnitt mit abgerundeten unteren Innenecken mit variablem Radius aufweist, wobei der Radius von vorne nach hinten kleiner wird, um auf diese Weise das Abgleiten der Ladung zu erleichtern.

Der Erfindung liegt die Aufgabe zugrunde, das Fahrzeug dahingehend weiterzuentwickeln, dass eine geringere Schubkraft der Schiebewand beim Entladen des Fahrzeugs aufgewendet werden muss.

Erfindungsgemäß wird diese Aufgabe durch die Merkmale des Anspruches 1 gelöst.

Das erfindungsgemäße Fahrzeug weist im Wesentlichen einen Boden, zwei Seitenwände, eine Schiebewand und eine Entladeöffnung auf, wobei Mittel vorgesehen sind, um die Breite der Schiebewand in jeder Stellung der Schiebewand an die lichte Weite zwischen den Seitenwänden anzupassen und sich die lichte Weite zwischen den beiden Seitenwänden in Schubrichtung der Schiebewand zu der Entladeöffnung vergrößert.

Weitere Vorteile der Erfindung sind Gegenstand der Unteransprüche.

Mit diese Maßnahme entsteht beim Entleeren des Transportgutes ein Freiraum zwischen Schiebewand und Ladegut, so dass es zu keiner Walgung an der Seitenwand kommt. Durch die fehlende Wandhaftung des Transportgutes ist daher eine entsprechend geringere Schubkraft erforderlich.

Weitere Ausgestaltungen der Erfindung sind Gegenstand der Unteransprüche.

Gemäß einem bevorzugten Ausführungsbeispiel weist die die Schiebewand insbesondere bewegliche Seitenteile auf, die mit den Seitenwänden in Kontakt stehen, um die Breite der Schiebewand in jeder Stellung der Schiebewand an die lichte Weite zwischen den Seitenwände anzupassen.

Gemäß einem bevorzugten Ausführungsbeispiel werden die beweglichen Seitenteile mittels Federelementen gegen die Seitenwände gedrückt.

Die Schiebewand weist in den Kontaktbereichen mit den Seitenwänden und/oder dem Boden Dichtungselemente auf, die mit der obenbeschriebenen Konstruktionen einen wesentlich geringeren Verschleiß aufweisen.

Weiterhin kann optional ein Schiebeboden vorgesehen werden, der relativ zum Boden verschiebbar ist, wobei die Schiebewand üblicherweise auf diesem Schiebeboden gehaltert ist. Auch der Schiebeboden weist dann Mittel auf, um die Breite des Schiebebodens in jeder Stellung des Schiebebodens an die lichte Weite zwischen den Seitenwänden anzupassen. Auch hier können bewegliche Seitenteile vorgesehen werden, die mit den Seitenwänden in Kontakt stehen, um die Breite anzupassen. Gemäß einer bevorzugten Ausführung werden diese beweglichen Seitenteile wiederum mittels Federelementen gegen die Seitenwände gedrückt.

Weitere Vorteile und Ausgestaltungen der Erfindung werden im folgenden anhand der Beschreibung eines Ausführungsbeispieles und der Zeichnung näher erläutert.

In der Zeichnung zeigen
- Fig. 1: eine dreidimensionale Darstellung des erfindungsgemäßen Anhängers,
- Fig. 2: eine Draufsicht des Anhängers,
- Fig. 3: eine Längsschnittansicht des Anhängers,
- Fig. 4: eine vergrößerte Ansicht des Details Y aus Fig. 3 in einer ersten Stellung der Schiebewand,
- Fig. 5: eine vergrößerte Ansicht des Details Y aus Fig. 3 in einer zweiten Stellung der Schiebewand,
- Fig. 6: eine vergrößerte Ansicht des Details Z aus Fig. 3 in einer ersten Stellung der Schiebewand,
- Fig. 7: eine vergrößerte Ansicht des Details Z aus Fig. 3 in einer zweiten Stellung der Schiebewand,

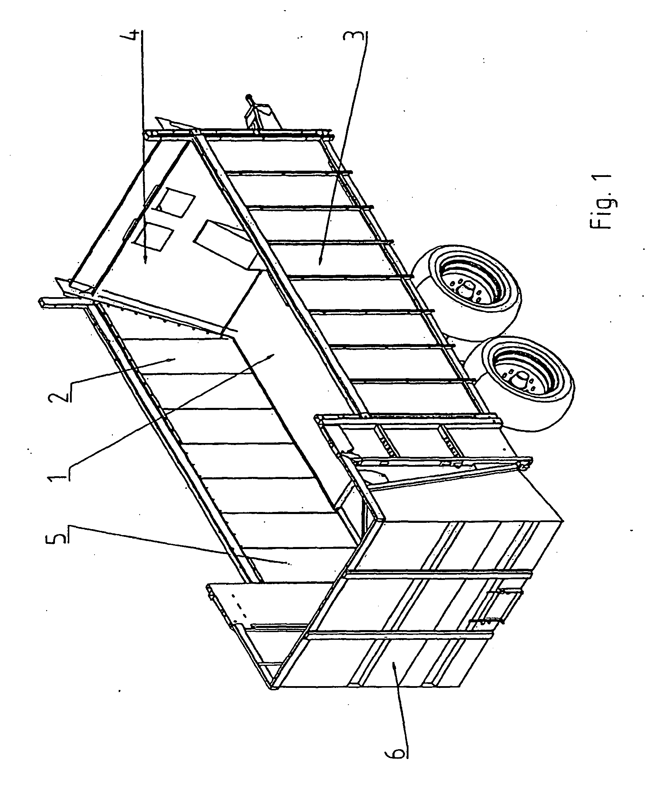

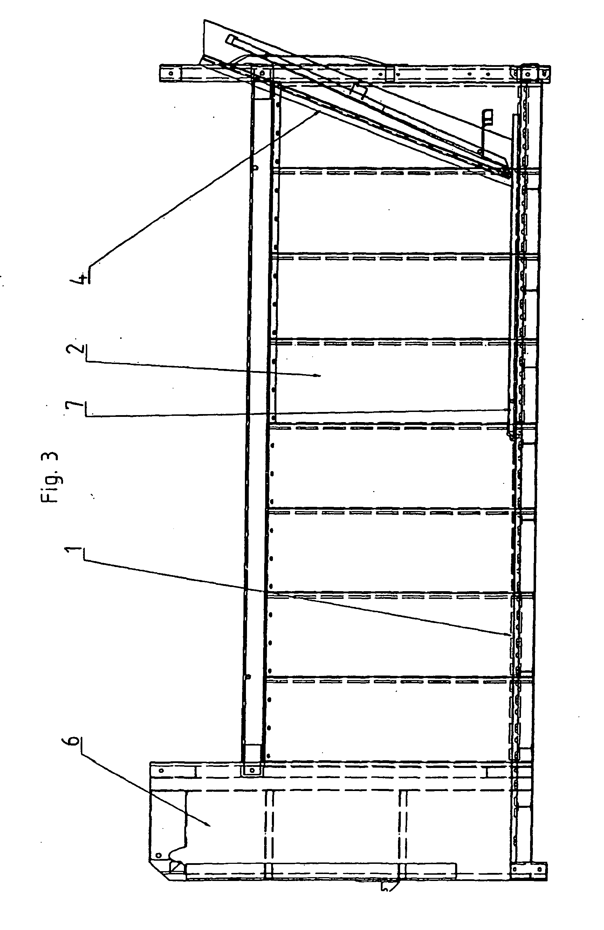

Bei dem in den Fig. 1 bis Fig. 3 dargestellten Fahrzeug handelt es sich um einen Anhänger mit einem Boden 1, Seitenwänden 2, 3, einer Schiebewand 4 und einer Entladeöffnung 5, die durch eine Entladeklappe 6 geschlossen werden kann.

Der dargestellte Anhänger weist außerdem eine Schiebeboden 7 auf, der über einen nicht näher dargestellten Antriebsmechanismus relativ zum Boden 1 verschoben werden kann. Die Schiebewand 4 ist über einen weiteren Antriebsmechanismus relativ zum Schiebeboden 7 bzw. dem Boden 1 verschiebbar.

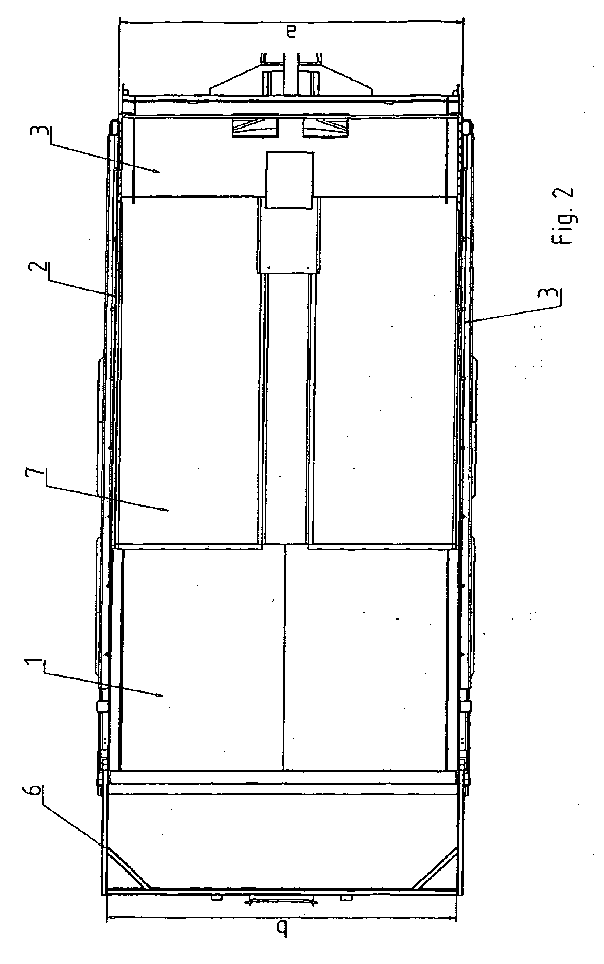

Die Besonderheit des Fahrzeugs besteht darin, dass sich die lichte Weite zwischen den beiden Seitenwänden 2 und 3 in Schubrichtung der Schiebewand zur Entladeöffnung 5 vergrößert. Das heißt die lichte Weite a zwischen den beiden Seitenwänden ist am der Entladeöffnung gegenüberliegenden Ende ist kleiner als die lichte Weite b im Bereich der Entladeöffnung. In der Draufsicht gemäß Fig. 2 ergibt sich somit ein trapezförmiger Grundriss, wobei die Weite b vorzugsweise zwischen 0,5 bis 4% größer ist als die Weite a.

Damit sich zwischen der Schiebewand 4 und den Seitenwänden 2, 3 bei einer Verschiebung der Schiebewand in Richtung der Entladeöffnung 5 kein Spalt ergibt, sind Mittel vorgesehen, um die Breite der Schiebewand in jeder Stellung der Schiebewand an die lichte Weite zwischen den Seitenwänden anzupassen.

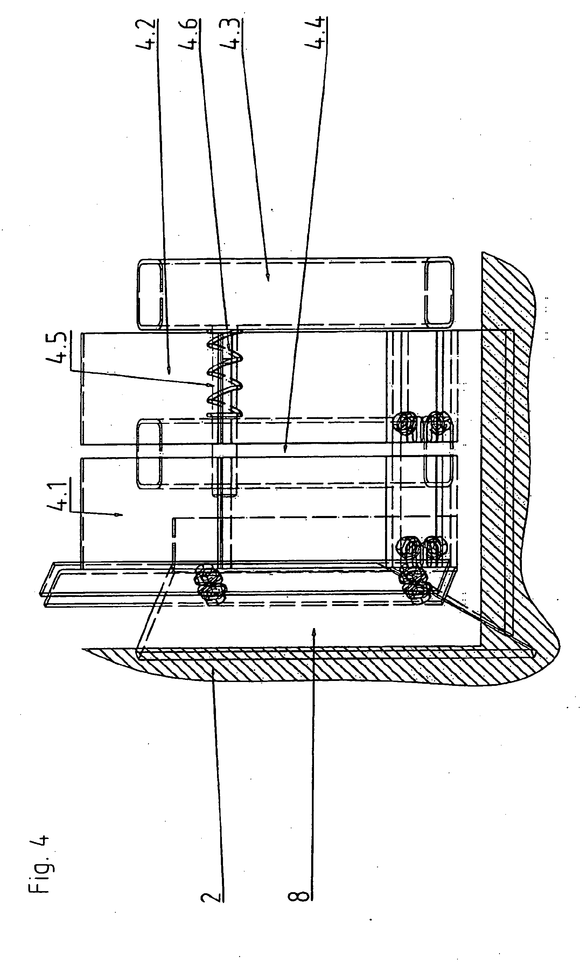

Gemäß Fig. 4 weist die Seitenwand 3 bewegliche Seitenteile 4.1 auf, die gegenüber einem Mittelteil 4.2 quer zur Schieberichtung der Seitenwand verschiebbar sind. Im Detail sind in diesem Bereich zwei Vierkantrohre 4.3 und 4.4 vorgesehen, wobei das Vierkantrohr 4.3 fest mit dem Mittelteil 4.2 und das Vierkantrohr 4.4 fest mit dem beweglichen Seitenteil 4.1 verbunden ist. Weiterhin sind über die Höhe der Seitenwand mehrere Bolzen 4.5 am Vierkantrohr 4.3 fest angebracht, wobei das Vierkantrohr 4.4 im Bereich von entsprechenden Bohrungen auf diese Bolzen 4.5 aufgesteckt und ferner ein Federelement 4.6 zwischen den beiden Vierkantrohren angeordnet ist. Der Bolzen 4.5 ragt dabei durch das Vierkantrohr 4.4 hindurch, um eine ausreichende Führung zu gewährleisten. Die Seitenwand ist in den Kontaktbereichen mit dem Seitenwänden und dem Boden mit Dichtungselementen 8, 9, insbesondere Dichtgummielementen versehen.

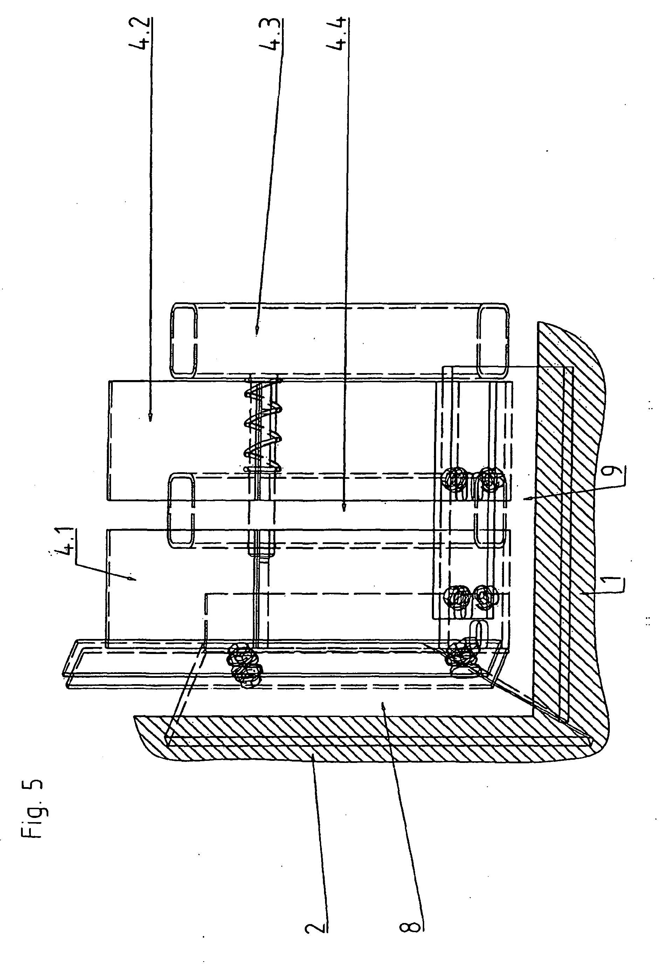

Fig. 5 zeigt wiederum den Ausschnitt gemäß Fig. 4, wobei sich jedoch die lichte Weite zwischen den Seitenwänden vergrößert hat, so dass sich zwischen dem beweglichen Seitenteil 4.1 und dem Mittelteil 4.2 ein größerer Spalt gebildet hat, der jedoch weiterhin durch das dahinter angeordnete Vierkantrohr 4.4 abgedeckt wird. Dieses bewegliches Seitenteil ist auf beiden Seiten der Seitenwand vorgesehen und stellt somit selbsttätig die Breite der Schiebewand 4 auf die lichte Weite zwischen den Seitenwänden ein.

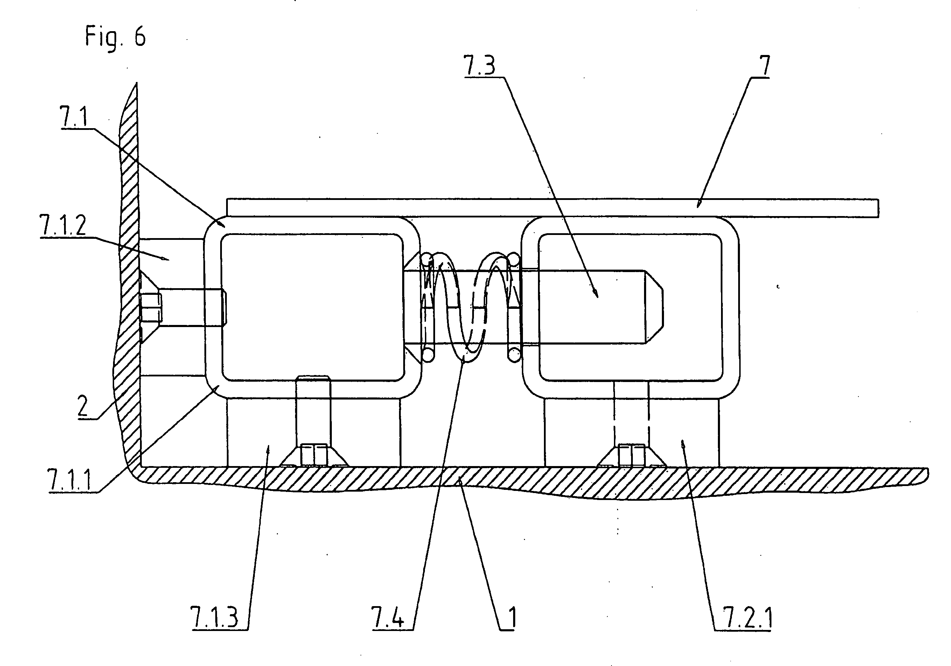

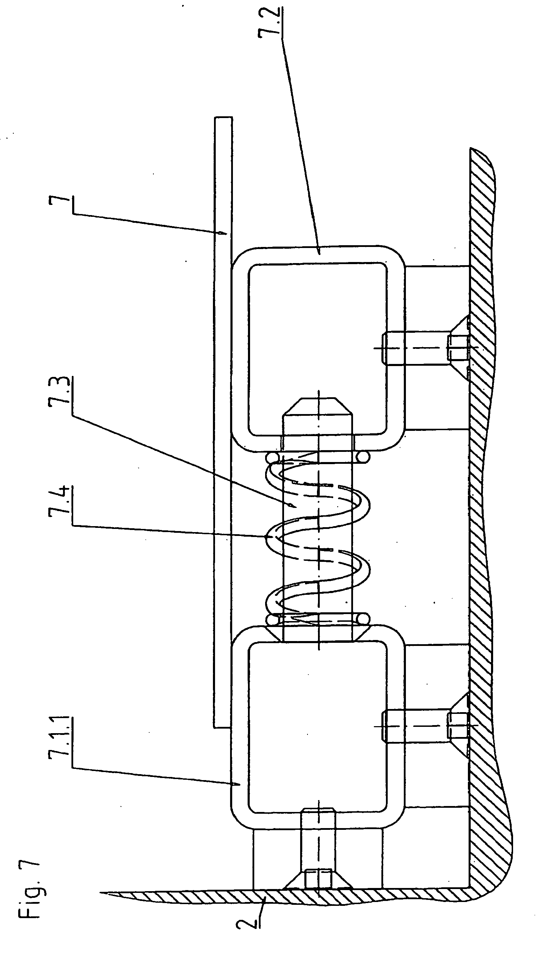

Bei Verwendung eines Schiebebodens 7 sollte sich auch dieser an die unterschiedlichen Weiten zwischen den Seitenwänden anpassen. In der Fig. 6 und 7 ist die Ausgestaltung des Schiebebodens 7 in diesem Bereich näher dargestellt. Auch der Schiebeboden weist auf jeder Seite ein bewegliches Seitenteil 7.1 auf, das im dargestellten Beispiel durch ein Vierkantrohr 7.1.1 gebildet wird, welches sich über eine Gleitauflage 7.1.2 an der Seitenwand und über eine Gleitauflage 7.1.3 am Boden 1 abstützt. Ein weiteres Vierkantrohr 7.2 ist fest mit dem Schiebeboden 7 verbunden und stützt sich über eine Gleitauflage 7.2.1 auf dem Boden ab.

Im dargestellten Ausführungsbeispiel ist das Vierkantrohr 7.1.1 mit mehreren Bolzen 7.3 versehen, die in eine entsprechende Bohrung des Vierkantrohres 7.2 ragen und auf diese Weise eine Führung des Vierkantrohres 7.1.1 bilden. Zwischen den beiden Vierkantrohren sind wiederum Federelemente 7.4 angeordnet, die das Vierkantrohr 7.1.1 mit seiner Gleitauflage 7.1.2 gegen die Seitenwand drücken.

Fig. 7 zeigt den Abschnitt des Schiebebodens 7 gemäß Fig. 6 in einer zweiten Stellung des Schiebebodens, in welcher der Schiebeboden 7 durch die nach außen gedrückten beweglichen Seitenteile in diesem Bereich breiter ist.

Der zur Entladeöffnung breiterwerdende Anhänger hat den wesentlichen Vorteil gegenüber bisherigen Abschiebesystemen, dass beim Entladen von Hackschnitzeln, Kompost, Torf und anderen halbzähen bis festen Transportgütern eine geringere Schubkraft für den Schiebeboden und die Schiebewand erforderlich ist, da die sonst vorhandene Wandhaftung des Transportgutes im wesentlichen aufgehoben wird. Es kommt auch zu keiner Walgung des Transportgutes an der Seitenwand. Es ergibt sich außerdem der weitere Vorteil, dass die an der Schiebewand angebrachten Dichtungselemente einem wesentlichen geringeren Verschleiß unterworfen sind.

## Patentansprüche

1. Fahrzeug, insbesondere ein Anhänger, mit einem Boden (1), zwei Seitenwänden (2, 3), einer Schiebewand (4) und einer Entladeöffnung (5),
wobei die Schiebewand (4) Mittel aufweist, um die Breite der Schiebewand in jeder Stellung der Schiebewand an die lichte Weite zwischen den Seitenwänden (2, 3) anzupassen,
**dadurch gekennzeichnet, dass** sich die lichte Weite zwischen den beiden Seitenwänden (2, 5) in Schubrichtung der Schiebewand (4) zur Entladeöffnung (5) vergrößert.

2. Fahrzeug nach Anspruch 1, **dadurch gekennzeichnet, dass** die Schiebewand (4) bewegliche Seitenteile (4.1) aufweist, die mittels Federelementen (4.6) gegen die Seitenwände (2, 3) gedrückt werden, um die Breite der Schiebewand in jeder Stellung der Schiebewand an die lichte Weite zwischen den Seitenwänden anzupassen.

3. Fahrzeug nach Anspruch 1, **dadurch gekennzeichnet, dass** die Schiebewand (4) in den Kontaktbereichen mit den Seitenwänden (2, 3) und/oder dem Boden mit Dichtungselementen (8,9) versehen ist.

4. Fahrzeug nach Anspruch 1, **dadurch gekennzeichnet, dass** weiterhin ein Schiebeboden (7) vorgesehen ist, der relativ zum Boden (1) verschiebbar ist.

5. Fahrzeug nach Anspruch 1, **dadurch gekennzeichnet, dass** weiterhin ein Schiebeboden (7) vorgesehen ist, der relativ zum Boden (1) verschiebbar ist und Mittel aufweist, um die Breite des Schiebebodens in jeder Stellung des Schiebebodens an die lichte Weite zwischen den Seitenwänden (2, 3) anzupassen.

6. Fahrzeug nach Anspruch 1, **dadurch gekennzeichnet, dass** weiterhin ein Schiebeboden (7) vorgesehen ist, der relativ zum Boden (1) verschiebbar ist und bewegliche Seitenteile aufweist, die mit den Seitenwänden in Kontakt stehen, um die Breite des Schiebebodens in jeder Stellung des Schiebebodens an die lichte Weite zwischen den Seitenwänden (2, 3) anzupassen.

7. Fahrzeug nach Anspruch 1, **dadurch gekennzeichnet, dass** weiterhin ein Schiebeboden (7) vorgesehen ist, der relativ zum Boden (1) verschiebbar ist und bewegliche Seitenteile aufweist, die mittels Federelementen (7.4) gegen die Seitenwände (2, 3) gedrückt werden, um die Breite des Schiebebodens in jeder Stellung des Schiebebodens an die lichte Weite zwischen den Seitenwänden anzupassen.

## Claims

1. Vehicle, in particular a trailer, having a bottom (1), two sides walls (2,3), a sliding wall (4) and an unloading opening (5),
the sliding wall (4) having means in order to adapt the width of the sliding wall in each position of the sliding wall to the clear span between the side walls (2, 3),
**characterised in that** the clear span between the two side walls (2, 5) increases in the thrust direction of the sliding wall (4) towards the unloading opening (5).

2. Vehicle according to claim 1, **characterised in that** the sliding wall (4) has movable side elements (4.1) which are pressed against the side walls (2, 3) by means of resilient elements (4.6) in order to adapt the width of the sliding wall in each position of the sliding wall to the clear span between the side walls.

3. Vehicle according to claim 1, **characterised in that** the sliding wall (4) is provided with sealing elements (8, 9) in the contact regions with the side walls (2, 3) and/or the bottom.

4. Vehicle according to claim 1, **characterised in that** there is further provided a sliding bottom (7) which can be displaced relative to the bottom (1).

5. Vehicle according to claim 1, **characterised in that** there is further provided a sliding bottom (7) which can be displaced relative to the bottom (1) and which has means in order to adapt the width of the sliding bottom in each position of the sliding bottom to the clear span between the side walls (2, 3).

6. Vehicle according to claim 1, **characterised in that** there is further provided a sliding bottom (7) which can be displaced relative to the bottom (1) and which has movable side elements which are in contact with the side walls in order to adapt the width of the sliding bottom in each position of the sliding bottom to the clear span between the side walls (2, 3) .

7. Vehicle according to claim 1, **characterised in that** there is further provided a sliding bottom (7) which can be displaced relative to the bottom (1) and which has movable side elements which are pressed against the side walls (2, 3) by means of resilient elements (7.4) in order to adapt the width of the sliding bottom in each position of the sliding bottom to the clear span between the side walls.

## Revendications

1. Véhicule automobile, en particulier une remorque, avec un fond (1), deux parois latérales (2, 3) une paroi coulissante (4) et une ouverture de déchargement (5),
la paroi coulissante (4) présentant des moyens, qui permettent d'adapter la largeur de la paroi coulissante à la largeur intérieure de passage entre les parois latérales (2, 3),
**caractérisé en ce que** la largeur intérieure de passage entre les deux parois latérales (2, 3) est élargie, dans la direction de poussée de la paroi coulissante (4), vers l'ouverture de déchargement (5).

2. Véhicule automobile selon la revendication 1, **caractérisé en ce que** la paroi coulissante (4) présente des parties latérales (4.1) mobiles, qui sont pressées contre les parois latérales (2, 3), au moyen d'éléments élastiques (4.6), pour adapter la largeur de la paroi coulissante à la largeur intérieure de passage entre les parois latérales, dans chaque position de la paroi coulissante.

3. Véhicule automobile selon la revendication 1, **caractérisé en ce que** la paroi coulissante (4) est pourvue d'éléments d'étanchéité (8, 9) dans les zones qui entrent en contact avec les parois latérales (2, 3) et ou le fond.

4. Véhicule automobile selon la revendication 1, **caractérisé en ce que,** de plus, est prévu un fond coulissant (7), qui peut être déplacé par rapport au fond (1).

5. Véhicule automobile selon la revendication 1, **caractérisé en ce que**, de plus, est prévu un fond coulissant (7), qui peut être déplacé par rapport au fond (1) et qui présente des moyens, qui permettent d'adapter la largeur du fond coulissant à la largeur intérieure de passage entre les parois latérales (2, 3), dans chaque position du fond coulissant.

6. Véhicule automobile selon la revendication 1, **caractérisé en ce que**, de plus, est prévu un fond coulissant (7), qui peut être déplacé par rapport au fond (1) et qui présente des parties latérales mobiles, qui sont en contact avec les parois latérales pour permettre d'adapter la largeur du fond coulissant à la largeur intérieure de passage entre les parois latérales (2, 3), dans chaque position du fond coulissant.

7. Véhicule automobile selon la revendication 1, **caractérisé en ce que,** de plus, est prévu un fond coulissant (7), qui peut être déplacé par rapport au fond (1) et qui présente des parties latérales mobiles, qui sont pressées contre les parois latérales (2, 3), au moyen d'éléments élastiques (7.4), pour adapter la largeur du fond coulissant à la largeur intérieure de passage entre les parois latérales, dans chaque position du fond coulissant.
